# EUROPEAN PATENT SPECIFICATION

(11) **EP 1 830 375 B1**
(45) Date of publication and mention of the grant of the patent: **08.05.2013**
(21) Application number: 07103329.4
(22) Date of filing: 01.03.2007
(51) Int. Cl.: H01H 13/83

(54) **Keypad assembly for electronic device**
Tastaturanordnung für ein elektronisches Gerät
Ensemble de clavier pour dispositif électrique

(30) Priority: 03.03.2006 KR 20060020658
(43) Date of publication of application: 05.09.2007
(73) Proprietor: Samsung Electronics Co., Ltd., Suwon-si, Gyeonggi-do, 443-742 (KR)
(72) Inventor: Lee, Joo-Hoon c/o Samsung Electronics Co., Ltd., Gyeonggi-do (KR); Cho, Byung-Duck c/o Samsung Electronics Co., Ltd., Gyeonggi-do (KR); Jang, Dong-Hoon c/o Samsung Electronics Co., Ltd., Gyeonggi-do (KR); Jung, Sun-Tae c/o Samsung Electronics Co., Ltd, Gyeonggi-do (KR)
(74) Representative: Grünecker, Kinkeldey, Stockmair & Schwanhäusser

(56) References cited:
- EP-A- 1 523 021
- DE-A1- 19 612 473
- FR-A- 2 863 724
- JP-A- 2005 174 866
- US-A1- 2003 034 240

## Description

### BACKGROUND OF THE INVENTION

### 1. Field of the Invention

The present invention generally relates to a keypad assembly for an electronic device, and in particular, to a keypad assembly in which key buttons of the electronic device each include at least one optical filtering layer that changes the color of an input light wavelength by reacting or not reacting to the light wavelengths generated from at least two light emitting devices.

### 2. Description of the Related Art

Generally, a "portable communication apparatus" refers to an electronic apparatus which provides electrical communication between users and service providers. As examples of the portable communication apparatus, there are HHPs (hand held phones), CT-2 cellular phones, digital phones, PCS (personal communication service) phones, and PDAs (personal digital assistants). Conventional portable communication apparatuses may be classified in various types according to their appearance. For example, wireless terminals are classified into bar-type wireless terminals, flip-type wireless terminals, and folder-type wireless terminals according to their appearance. The conventional portable terminals are equipped with antenna devices, data input/output devices, and data transmission/reception devices. As the data input/output devices, keypads allowing data input through a finger press task are generally used.

A keypad used for data input includes a plate-shaped elastic pad, a plurality of key buttons on the top surface of the elastic pad, having characters printed thereon, and a plurality of protrusions on the bottom surface of the elastic pad. The portable terminals generally include a plurality of (typically 15 - 20) light emitting devices for backlighting the key pad.

The DE 196 12 473 A1 discloses such a keypad.

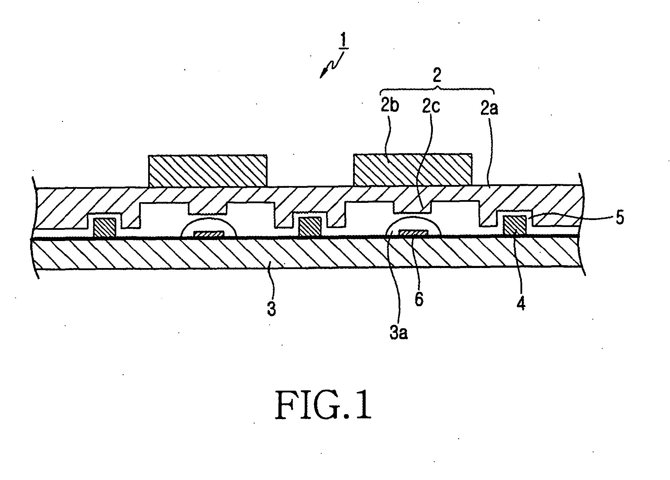

FIG 1 is a cross-sectional view of a conventional keypad assembly 1. The keypad assembly 1 includes a keypad 2, a switch board 3, and a plurality of Light Emitting Diodes (LEDs) 4.

The keypad 2 includes an elastic pad 2a that is made of a flexible material (e.g., rubber) and is plate-shaped, a plurality of key buttons 2b that are formed on the top surface of the elastic pad 2a and has numbers and characters printed thereon, and a plurality of protrusions that are formed on the bottom surface of the elastic pad 2a.

Each of the protrusions 2c is arranged at the center of each of the key buttons 2b and a plurality of grooves 5 may be formed in the bottom face of the elastic pad 2a. The grooves 5 are arranged around the protrusions 2c in such a way to avoid interference caused by the LEDs 4 and the protrusions 2c.

The switch board 3 includes a plate-shaped Printed Circuit Board (PCB) and a plurality of dome switches 3a formed on the top surface of the PCB facing the keypad 2.

The LEDs 4 are amounted on the top surface of the PCB and are positioned to be covered by the grooves 5 of the elastic pad 2a.

If a user presses one of the key buttons 2b, a portion of the keypad 2 under the pressed key button 2b is transformed towards the switch board 3 and thus the protrusion 2c included in the transformed portion presses the dome switch 3a. A contact member 6 included in the dome switch 3a electrically contacts the protrusion 2c.

For operations of the dome switches 3a, the LEDs 4 cannot be positioned under the key buttons 2b. Since a light A1 output from each of the LEDs 4 passes through the elastic pad 2a and illuminates each of the key buttons 2b in the form of a square, the illumination of the key button 2b is non-uniform and dark.

If a large number of LEDs 4 are installed to uniformly and brightly illuminate the key buttons 2b, power consumption increases. Moreover, due to a large number of parts, the time required for the assembly of a terminal and manufacturing cost of the terminal increase.

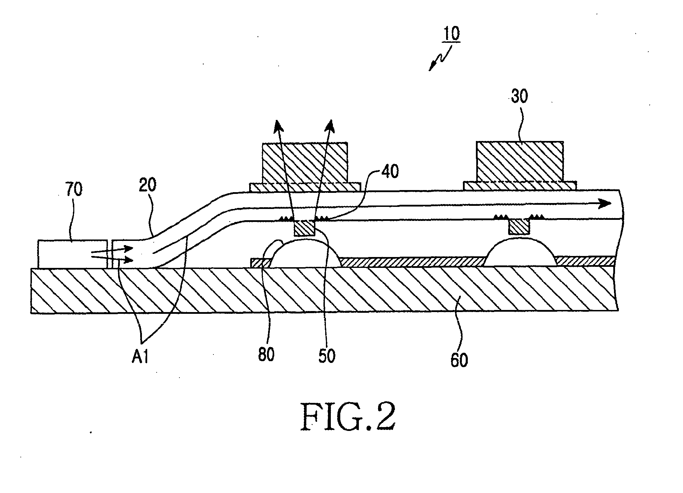

To address the problems, a keypad assembly including a light guide plate and reflecting patterns has been developed as shown in FIG 2.

FIG 2 is a cross-sectional view showing a light guide plate 20 and a plurality of reflecting patterns 40 in a conventional keypad assembly 10. Referring to FIG 2, the keypad assembly 10 includes the light guide plate 20 through which a light moves, a plurality of key buttons 30 that are formed on the top surface of the light guide plate 20 and have numbers and characters printed thereon, the reflecting patterns 40 that are formed on the bottom surface of the light guide plate 20 and reflect the light A1 moving through the light guide plate 20 towards the key buttons 30, protrusions 50 under the reflecting patterns 40, a plurality of light emitting devices 70 that provide the light A1 to the light guide plate 20, and a switch board 60 including dome switches 80.

The single light guide plate 20 is provided for the illumination of the entire key buttons 30.

As such, the entire key buttons 30 can be illuminated using the light guide plate 20, but the numbers and characters printed on the key buttons 3 cannot be separately illuminated. As a result, the utility of the numbers and characters of the key buttons 30 may be degraded in some modes of the terminal.

### SUMMARY OF THE INVENTION

The present invention provides a keypad assembly for an electronic device according to the features of claim 1, in which key buttons of the electronic device each include at least one optical filtering layer which changes the color of an input light wavelength by reacting or not reacting to the light wavelengths generated from at least two light emitting devices, thereby allowing numbers and characters printed on the key buttons to express different colors.

It is one aspect of the present invention to provide a keypad assembly for an electronic device, in which numbers and characters printed on key buttons of the electronic device are separately illuminated with different colors, thereby improving the utility of the key buttons.

It is another aspect of the present invention to provide a keypad assembly for an electronic device, in which special character faces on key buttons of the electronic device each include at least one optical filtering layer that changes the color of an input light wavelength by reacting to light wavelengths generated from at least two light emitting devices, thereby allowing the special characters to express different colors.

According to yet another aspect of the present invention, there is provided a keypad assembly for an electronic device. The keypad assembly includes a light guide plate through which a light moves, a plurality of first key buttons on the top surface of the light guide plate, a plurality of reflecting patterns on the bottom surface of the light guide plate for reflecting the light moving through the light guide plate toward the first key buttons, protrusions under the reflecting patterns, a plurality of light emitting devices for supplying the light to the light guide plate, and a switch board including a plurality of dome switches And at least one first optical filtering layer whose color is changed into other colors by reacting or not reacting to the wavelengths of lights generated from the light emitting devices is included under each of the first key buttons.

According to another aspect of the present invention, there is provided a keypad assembly for an electronic device. The keypad assembly includes a light guide plate through which a light moves, a plurality of key buttons on the top surface of the light guide plate, a plurality of reflecting patterns on the bottom surface of the light guide plate for reflecting the light moving through the light guide plate toward the key buttons, protrusions under the reflecting patterns, a plurality of light emitting devices for supplying the light to the light guide plate, and a switch board including a plurality of dome switches and at least one first and second optical filtering layers whose colors are changed into other colors by reacting or not reacting to the wavelengths of lights generated from the light emitting devices are included under a number face and a character face of each of the key buttons, respectively.

### BRIEF DESCRIPTION OF THE DRAWINGS

The above features and advantages of the present invention will become more apparent from the following detailed description when taken in conjunction with the accompanying drawings in which:
FIG 1 is a cross-sectional view of a conventional keypad assembly;
FIG 2 is a cross-sectional view of a light guide plate and reflecting patterns in a conventional keypad assembly;
FIG 3 is a front view of a keypad assembly for an electronic device according to a first embodiment of the present invention;
FIG. 4 is a front view of a keypad assembly for an electronic device according to a first embodiment of the present invention, in which a first light emitting device emits a light;
FIG 5 is a cross-sectional view of a keypad assembly for an electronic device according to a first embodiment of the present invention, in which the first light emitting device emits a light;
FIG 6 is a front view of a keypad assembly for an electronic device according to a first embodiment of the present invention, in which key buttons are used when the first light emitting device emits a light;
FIG 7 is a front view of a keypad assembly for an electronic device according to a first embodiment of the present invention, in which a second light emitting device emits a light;
FIG 8 is a cross-sectional view of a keypad assembly for an electronic device according to a first embodiment of the present invention, in which the second light emitting device emits a light;
FIG 9 is a front view of a keypad assembly for an electronic device according to a first embodiment of the present invention, in which key buttons are used when the second light emitting device emits a light;
FIG. 10 is a front view of a keypad assembly for an electronic device according to a second embodiment of the present invention;
FIG 11 is a cross-sectional view of a keypad assembly for an electronic device according to a second embodiment of the present invention, in which a first light emitting device emits a light;
FIG 12 is a front view of a keypad assembly for an electronic device according to a second embodiment of the present invention, in which key buttons are used when the first light emitting device emits a light;
FIG 13 is a cross-sectional view of a keypad assembly for an electronic device according to a second embodiment of the present invention, in which a second light emitting device emits a light; and
FIG 14 is a front view of a keypad assembly for an electronic device according to a second embodiment of the present invention, in which the key buttons are used when the second light emitting device emits a light.

### DETAILED DESCRIPTION OF THE INVENTION

Now, embodiments of the present invention will now be described in detail with reference to the annexed drawings. In the following description, elements having the identical functions with conventional functions will be designated by the same reference numerals.

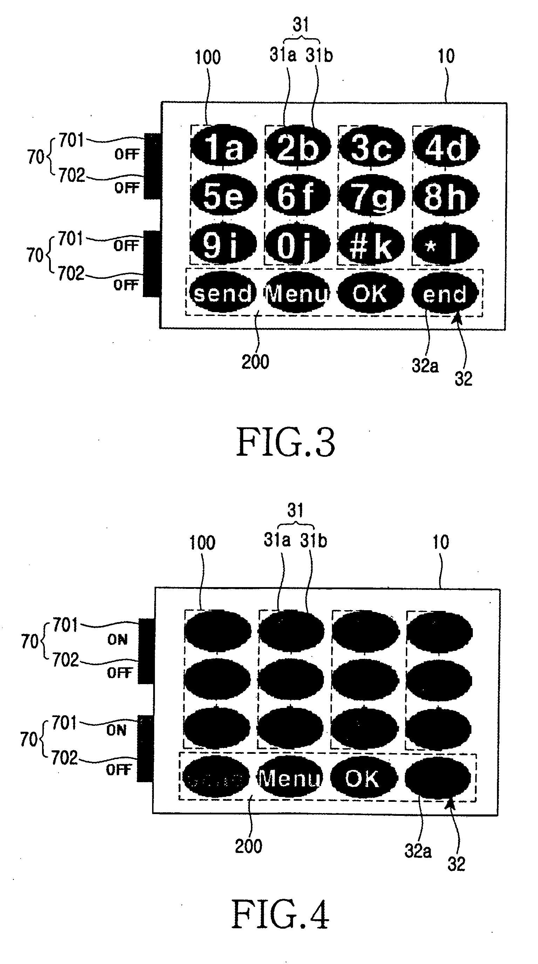

FIG 3 is a front view of a keypad assembly 10 for an electronic device according to a first embodiment of the present invention.

Similar to the conventional keypad assembly 10 shown in FIG 2, the keypad assembly 10 includes a light guide plate 20 (not shown) through which light travels, a plurality of key buttons 30 (not shown)on the top surface of the light guide plate 20 (not shown), a plurality of reflecting patterns 40 (not shown) on the bottom surface of the light guide plate 20 (not shown)for reflecting a light traveling through the light guide plate 20 (not shown) toward the key buttons 30 (not shown), protrusions 50 (not shown) under the reflecting patterns 40 (not shown), a plurality of light emitting devices, each including a first light emitting device 701 and a second light emitting device 702, for supplying a light to the light guide plate, and a switch board 60 (not shown) including a plurality of dome switches 80 (not shown).

As shown in FIG 3, at least one optical filtering layer 100 whose light output color is changed into other colors by reacting or not reacting to the wavelengths of lights generated from the first light emitting device 701 and the second light emitting device 702 is formed under the selected groups of key buttons 30. The optical filtering layers 100 are made, preferably, of phosphor.

The optical filtering layers 100 emit red, green, blue, and combinations thereof (e.g., purple or violet). In one aspect of the invention, the wavelength of a light generated from the first light emitting device 701 is 400nm such that the optical filtering layers 100 react to produce an light output of another color and the wavelength of a light generated from the second light emitting device 702 is 470nm such that the optical filtering layers 100 do not react and the light color produced is the same as the input light wavelength color.

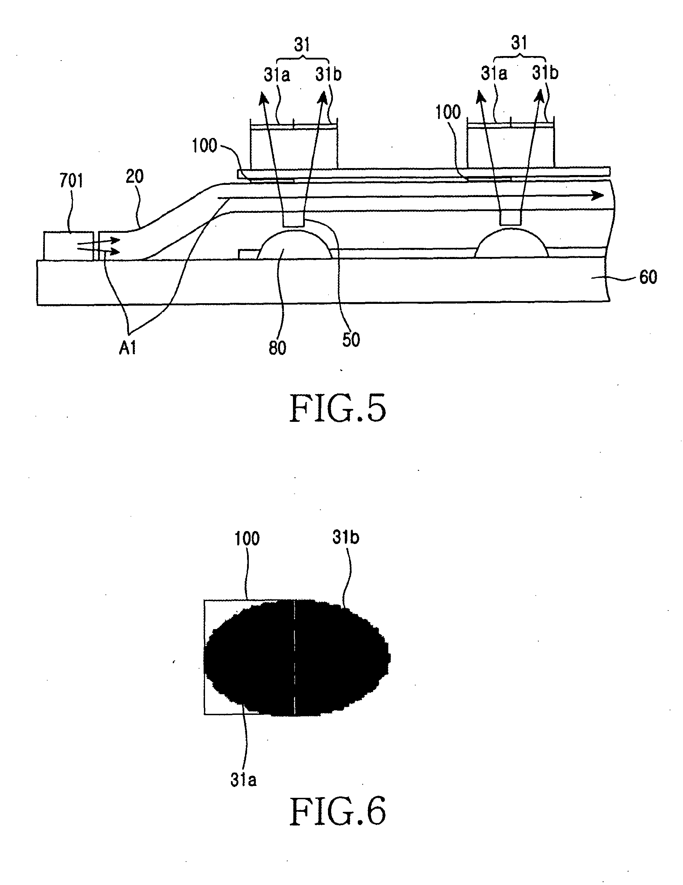

Referring to FIGs. 4 and 5, when the first light emitting device 701 emits a light of 400nm, the optical filtering layers 100 react and illuminate the key buttons 30 with various colors. For example, in one aspect of the invention, the number character of the keys 30 may be displayed in a red or pink color, while the letter character of the keys 30 may be displayed in a purple or violet color. In addition, the terms "send," "menu," "OK" and "end," may be grouped together and displayed in a totally different color, e.g., green.

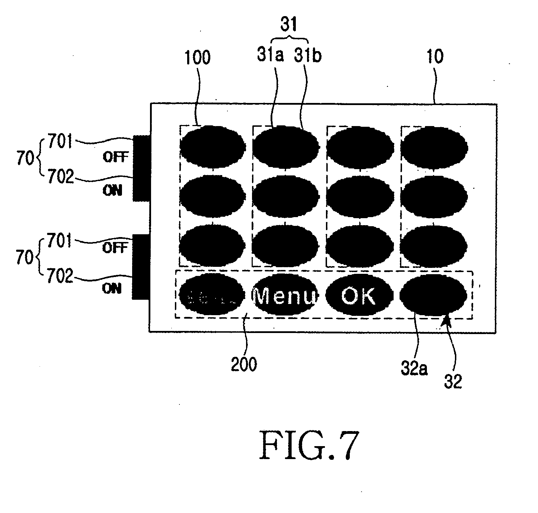

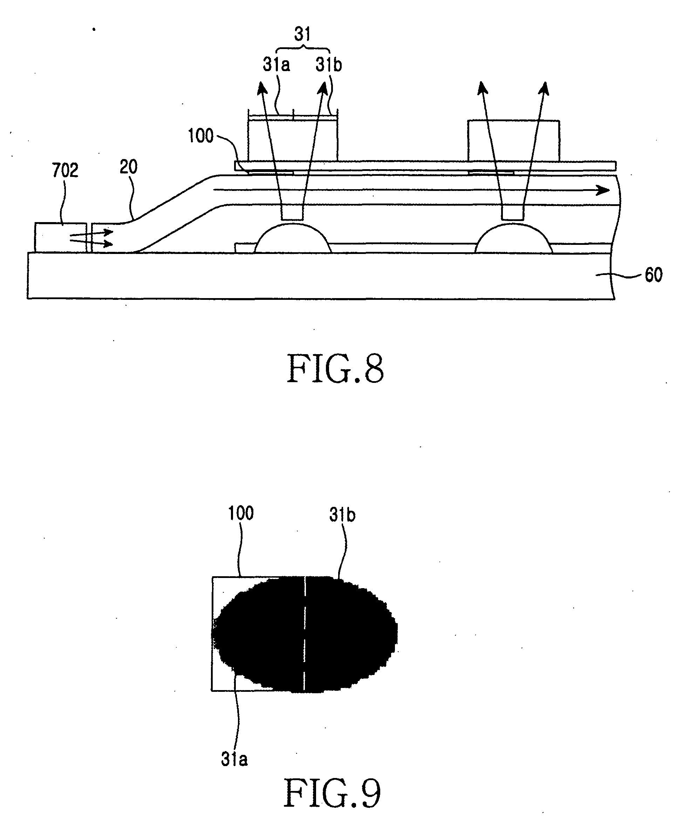

Referring to FIGs. 7 and 8, when the second light emitting device 702 emits a light of 470nm, the optical filtering layers 100 do not react and illuminate the key buttons 30 with a single color. For example, the number and letter characters on the keys 30 may be displayed in a blue color, i.e., 470nm.

Printing faces 31 on which numbers and characters are printed are formed on the key buttons 30 and each of the printing faces 31 includes a number face 31 a and a character face 31b (FIG 3). The optical filtering layer 100 is selectively included under the number face 31a or the character face 31b.

As shown in FIGs. 4 and 7, key buttons 32 including special character faces 32a are included adjacent to the number faces 31 a and the character faces 31 b of the key buttons 30 and optical filtering layers 200 for illuminating the special character faces 31b with other colors by reacting to both 400nm and 470nm lights generated from the first light emitting device 701 and the second light emitting device 702 are included under the special character faces 32a.

According to another embodiment of the present invention, the light emitting devices 70 are included adjacent to the dome switches 80 of the switch board 60.

The optical filtering layer 100 can be selectively installed on or under the key buttons 30 or in positions according to the moving path of the light emitted from the light emitting devices 70.

Hereinafter, the operation of the keypad assembly 10 according to the first embodiment of the present invention will be described with reference to FIGs. 3 through 9 in more detail.

As shown in FIG 3, the keypad assembly 10 includes the key buttons 30 having the number faces 31 a and the character faces 31 b on which numbers and characters are printed and the optical filtering layers 100 under the key buttons 30. The optical filtering layers 100 are made of phosphor. The optical filtering layer 100 is included under the number face 31 a of the key button 30 and the first light emitting device 701 and the second light emitting device 702 for supplying a light A1 to the light guide plate 20 are included at a side of the key button 30.

In this state, as shown in FIGs. 4 through 6, when a keypad mode of a terminal is used for the input of characters, once the first light emitting device 701 is turned on, the first light emitting device 701 emits a violet (purple) light of 400nm. At this time, the optical filtering layer 100 under the number face 31 a reacts and illuminates the number face 31 a with another color by emitting a light of another color (e.g., pink), and illuminates the character face 31b with violet.

As shown in FIG 4, the number face 31 a and the character face 31 b of the key button 30 are illuminated with different colors. At this time, the second light emitting device 702 is in an OFF state.

As shown in FIGs. 7 through 9, when the keypad mode is used for other functions (games and moving picture watching), the first light emitting device 701 is turned off and the second light emitting device 702 is turned on. At this time, the second light emitting device 702 emits a blue light of 470nm and the optical filtering layer 100 does not react and both the number face 31 a and the character face 31 b of the key button 30 are illuminated with a blue color.

As show in FIGs. 4 and 7, the key buttons 32 including the special character faces 32a are included adjacent to the number faces 31a and the character faces 31b of the key buttons 30 and the optical filtering layer optical filtering layers 200 for illuminating the special character faces 31 b with various colors by reacting to both 400nm and 470nm of the lights generated from the first light emitting device 701 and the second light emitting device 702 are included under the special character faces 32a. Thus, when the first light emitting device 701 emits a light of 400nm, the optical filtering layer 100 under the number face 31 a of the key button 30 reacts and emits red or green lights and the optical filtering layer 200 under the special character face 32a of the key button 32 reacts and emits a light of another color (not red or green).

When the first light emitting device 702 emits a light of 470nm, the optical filtering layer 100 under the number face 3 1 a of the key button 30 does not react and the optical filtering layer 200 under the special character face 32a of the key button 32 reacts and emits light of various colors.

Here, the electronic device generally refers to a portable communication apparatus.

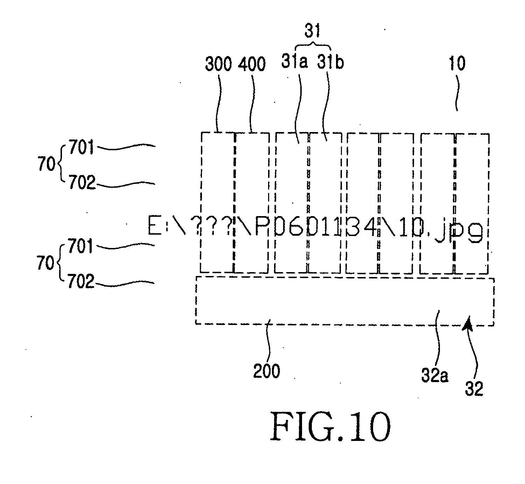

Hereinafter, the operation of the keypad assembly 10 according to a second embodiment of the present invention will be described with reference to FIGs. 10 through 14 in more detail.

As shown in FIG 10, the keypad assembly 10 includes a first optical filtering layer 300 under the number face 31a and a second optical filtering layer 400 under the character face 32a of the key button.

The first optical filtering layer 300 is made of a first phosphor and the second optical filtering layer is made of a second phosphor.

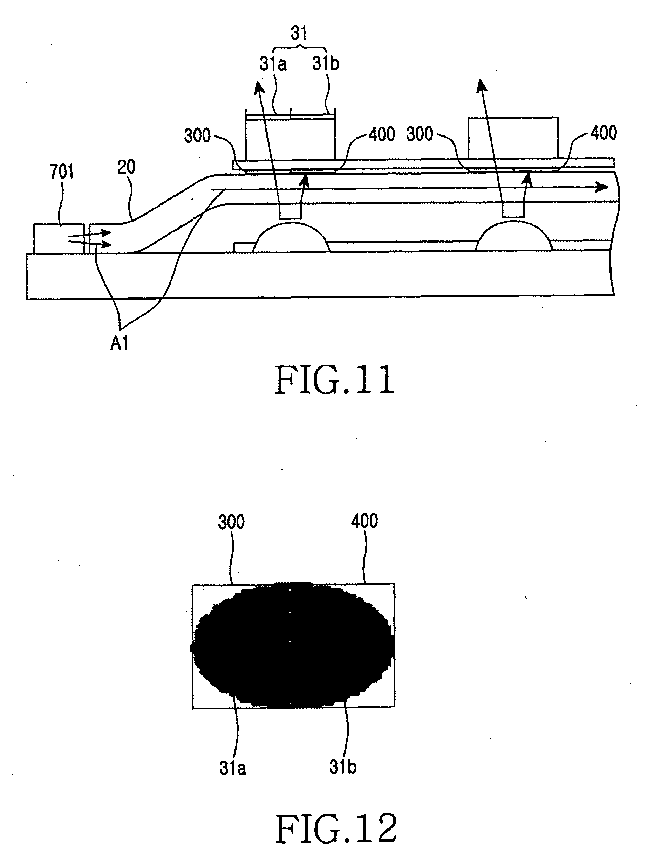

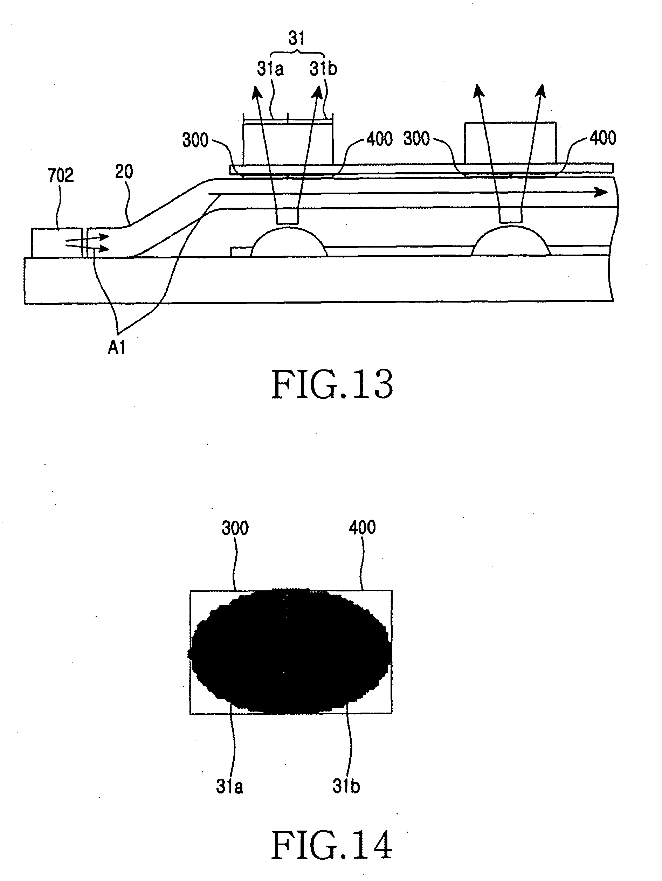

As shown in FIGs. 11 and 13, the first optical filtering layer 300 is under the number face 31 a and the second optical filtering layer 400 is under the character face 31b.

In this state, the first light emitting device 701 at a side of the keypad 10 is turned on to cause the first light emitting device 701 to emit a light. At this time, the second light emitting device 702 is in the OFF state.

As shown in FIGs. 11 and 12, when the first light emitting device 701 emits a violet light of 400nm, the first optical filtering layer 300 reacts and illuminates the number face 31 a of the key button 30 with another color (e.g., pink).

As shown in FIGs. 13 and 14, whenthe first light emitting device 701 is turned off and the second light emitting device 702 is turned on, the second light emitting device 702 emits a blue light of 470nm.

In this case, the first optical filtering layer 300 and the second optical filtering layer 400 do not react to the input blue light, and the first optical filtering layer 300 illuminates the number face 31 a of the key button 30 with a blue light and the second optical filtering layer 400 also illuminates the character face 31 b of the key button 30 with a blue light.

As such, when the first light emitting device 701 emits a violet light of 400nm, the first optical filtering layer 300 reacts and illuminates the number face 31 a with pink color instead of violet and the second optical filtering layer 300 does not react and illuminates the character face 31b with a violet color.

When the second light emitting device 702 emits a blue light of 470nm, the first optical filtering layer 300 and the second optical filtering layer 400 do not react and thus illuminate the number face 31 a and the character face 31 b with blue.

As described above, according to the present invention, by including at least one optical filtering layer (phosphor) whose color is changed into various colors by reacting or not reacting to the wavelengths of lights generated from at least two light emitting devices in key buttons of a terminal, number faces, character faces, and special character faces on the key buttons of the terminal can be illuminated with various colors according to the lights emitted from the optical filtering layer.

While the present invention has been shown and described with reference to preferred embodiments thereof, it will be understood by those skilled in the art that various changes in form and details may be made therein without departing from the spirit and scope of the invention.

## Claims

1. A keypad assembly for an electronic device, comprising:
a light guide plate (20) through which a light moves;
a plurality of key buttons (30) on the top surface of the light guide plate;
a plurality of reflecting patterns (40) on the bottom surface of the light guide plate for reflecting the light moving through the light guide plate toward the key buttons;
protrusions (50) under the reflecting patterns;
a plurality of light emitting devices (701, 702) for supplying the light to the light guide plate; and
a switch board (60) including a plurality of dome switches (80),
**characterized in that**
at least one first optical filtering layer (100, 300) is positioned under a select portion of each key button of a group of key buttons, and the light color output by the filtering layer is changed into various colors by reacting or not reacting to the wavelengths of lights generated from the light emitting devices; and
the light emitting devices include a first light emitting device (701) and a second light emitting device (702), wherein the first light emitting device emits a light of a wavelength different from the one of the light emitted by the second light emitting device (702).

2. The keypad assembly of claim 1, wherein the first optical filtering layer (100) is made of phosphor.

3. The keypad assembly of claim 2, wherein the phosphor emits red, green, blue lights, and combinations thereof.

4. The keypad assembly of any of claims 1 - 3, wherein the first light emitting device emits a light of substantially 400 nm and the second light emitting device emits a light of substantially 470 nm.

5. The keypad assembly of claim 4, wherein the first optical filtering layer (100) reacts and illuminates the key buttons with various colors by emitting lights of various colors when the first light emitting device emits a light of 400 nm; and
wherein the first optical filtering layer does not react and illuminates the key buttons with a single color by emitting lights of the single color when the second light emitting device emits a light of 470 nm.

6. The keypad assembly of any of claims 1 - 5, wherein printed faces, each including a number face (31 a) and a character face (31 b) are printed on the key buttons and the first optical filtering layer (100) is selectively included under the number face or the character face.

7. The keypad assembly of claim 6, wherein the first optical filtering layer (100) is included under the number face of the key buttons.

8. The keypad assembly of any of claims 1 - 7, wherein the light emitting devices are included adjacent to the dome switches of the switch board.

9. The keypad assembly of any of claims 1 - 8, wherein the first optical filtering layer (100) is installed under the key buttons according to the traveling path of the light emitted from the light emitting devices.

10. The keypad assembly of any of claims 1 - 9, further comprising:
a plurality of special key buttons (32) providing special character faces (32b); and
second optical filtering layers (200) positioned under the special key buttons for illuminating the special character faces with various colors by reacting to lights generated from the first light emitting device and the second light emitting device.

11. The keypad assembly of claim 1, wherein
at least one first (300) and second (400) optical filtering layers are positioned under a number face (31 a) and a character face (31b) of each of the key buttons (30), respectively, the first and second optical filtering layers changing color of the generated light into various colors by reacting or not reacting to the wavelengths of lights generated from the light emitting devices.

12. The keypad assembly of claim 11, wherein the first optical filtering layer reacts and illuminates the number face of the key button with a first color and the second optical filtering layer does not react and illuminates the character face of the key button a second color when the first light emitting device emits a violet light of 400 nm; and
wherein the first optical filtering layer and the second optical filtering layer do not react and illuminate the number face and the character face of the key button with a blue color, when the second light emitting device emits a blue light of 470 nm.

## Patentansprüche

1. Eine Tatstaturvorrichtung für ein elektronisches Gerät, die umfasst:
eine Lichtführungsplatte (20), durch die sich Licht bewegt;
eine Mehrzahl an Tastaturtasten (30) auf der Oberseite der Lichtführungsplatte;
eine Mehrzahl an reflektierenden Mustern (40) auf der Unterseite der Lichtführungsplatte zum Reflektieren des Lichts, das sich durch die Lichtführungsplatte zu den Tastaturtasten bewegt;
Vorsprünge (50) unter den reflektierenden Mustern;
eine Mehrzahl an Licht emittierenden Einrichtungen (701, 702) zum Liefern des Lichts zu der Lichtführungsplatte; und
eine Schalterblende (60), die eine Mehrzahl an kuppelförmigen Schaltern aufweist,
**dadurch gekennzeichnet, dass**
zumindest eine erste optisch filternde Schicht (100, 300) unter einem ausgewählten Bereich jeder Tastaturtaste einer Gruppe von Tastaturtasten positioniert ist und die Lichtfarbe, die von der filternden Schicht ausgegeben wird, durch Reagieren oder Nichtreagieren auf die Wellenlängen von Licht, das von den Licht emittierenden Einrichtungen erzeugt wird, in verschiedene Farben geändert wird; und
die Licht emittierenden Einrichtungen eine erste Licht emittierende Einrichtung (701) und eine zweite Licht emittierende Einrichtung (702) enthalten, wobei die erste Licht emittierende Einrichtung Licht einer Wellenlänge emittiert, die von derjenigen des Lichts verschieden ist, das von der zweiten Licht emittierenden Einrichtung (702) emittiert wird.

2. Die Tatstaturvorrichtung von Anspruch 1, in der die erste optisch filternde Schicht (100) aus Phosphor besteht.

3. Die Tatstaturvorrichtung von Anspruch 2, in der das Phosphor rotes, grünes, blaues Licht und eine Kombination davon emittiert.

4. Die Tatstaturvorrichtung von einem der Ansprüche 1 - 3, in der die erste Licht emittierende Einrichtung Licht mit im Wesentlichen 400 nm emittiert, und die zweite Licht emittierende Einrichtung Licht mit im Wesentlichen 470 nm emittiert.

5. Die Tatstaturvorrichtung von Anspruch 4, in der die erste optisch filternde Schicht (100) reagiert und die Tastaturtasten mit verschiedenen Farben durch Emittieren von Licht verschiedener Farben beleuchtet, wenn die erste Licht emittierende Einrichtung Licht mit 400 nm emittiert; und
in der die erste optisch filternde Schicht (100) nicht reagiert und die Tastaturtasten mit einer einzigen Farbe durch Emittieren von Licht der einzigen Farbe beleuchtet, wenn die zweite Licht emittierende Einrichtung Licht mit 470 nm emittiert.

6. Die Tatstaturvorrichtung von einem der Ansprüche 1 - 5, in der bedruckte Flächen, von denen jede eine Nummernfläche (31 a) und eine Zeichenfläche (31 b) einschließt, auf die Tastaturtasten gedruckt sind, und die erste optisch filternde Schicht (100) wahlweise unter der Nummernfläche oder Zeichenfläche enthalten ist.

7. Die Tatstaturvorrichtung von Anspruch 6, in der die erste optisch filternde Schicht (100) unter der Nummernfläche der Tastaturtasten enthalten ist.

8. Die Tatstaturvorrichtung von einem der Ansprüche 1 - 7, in der die Licht emittierenden Einrichtungen benachbart zu den kuppelförmigen Schaltern der Schaltblende enthalten sind.

9. Die Tatstaturvorrichtung von einem der Ansprüche 1 - 8, in der die erste optisch filternde Schicht (100) unter den Tastaturtasten gemäß dem Laufweg des Lichts, das von den Licht emittierenden Einrichtungen emittiert wird, angebracht ist.

10. Die Tatstaturvorrichtung von einem der Ansprüche 1 - 9, die weiterhin umfasst:
eine Mehrzahl an speziellen Tastaturtasten, die spezielle Zeichenflächen (32b) bereitstellen; und
zweite optisch filternde Schichten (200), die unter den speziellen Tastaturtasten zum Beleuchten der speziellen Zeichenflächen mit verschiedenen Farben durch Reagieren auf Licht, das von der ersten Licht emittierenden Einrichtung und der zweiten Licht emittierenden Einrichtung erzeugt wird, angebracht sind.

11. Die Tatstaturvorrichtung von Anspruch 1, in der
zumindest eine erste (300) und zweite (400) optisch filternde Schicht unter einer Nummernfläche (31 a) bzw. einer Zeichenfläche (31 b) jeder der Tatstaturtasten (30) positioniert sind, wobei die erste und zweite optisch filternde Schicht eine Farbe des erzeugten Lichts in verschiedene Farben durch Reagieren oder Nichtreagieren auf die Wellenlängen des von den Licht emittierenden Einrichtungen erzeugten Lichts ändern.

12. Die Tatstaturvorrichtung von Anspruch 11, in der die erste optisch filternde Schicht reagiert und die Nummernfläche der Tastaturtaste mit einer ersten Farbe beleuchtet und die zweite optisch filternde Schicht nicht reagiert und die Zeichenfläche der Tastaturtaste mit einer zweiten Farbe beleuchtet, wenn die erste Licht emittierende Einrichtung ein violettes Licht mit 400 nm emittiert; und
wobei die erste optisch filternde Schicht und die zweite optisch filternde Schicht nicht reagieren und die Nummernfläche und die Zeichenfläche der Tastaturtaste mit einer blauen Farbe beleuchten, wenn die zweite Licht emittierende Einrichtung ein blaues Licht mit 470 nm emittiert.

## Revendications

1. Ensemble clavier pour dispositif électronique, comprenant :
une plaque de guidage de lumière (20) traversée par une lumière ;
une pluralité de touches (30) sur la surface supérieure de la plaque de guidage de lumière ;
une pluralité de motifs réfléchissants (40) sur la surface inférieure de la plaque de guidage de lumière pour réfléchir vers les touches la lumière traversant la plaque de guidage de lumière ;
des protubérances (50) au-dessous des motifs réfléchissants ;
une pluralité de dispositifs électroluminescents (701, 702) pour fournir la lumière à la plaque de guidage de lumière ; et
un tableau de commutation (60) incluant une pluralité de commutateurs en forme de dôme (80),
**caractérisé en ce que**
au moins une première couche de filtrage optique (100, 300) est positionnée en dessous d'une partie sélectionnée de chaque touche ou d'un groupe de touches et la couleur de lumière fournie en sortie par la couche de filtrage est transformée en diverses couleurs par réaction ou absence de réaction avec les longueurs d'onde des lumières générées par les dispositifs électroluminescents ; et
les dispositifs électroluminescents comportent un premier dispositif électroluminescent (701) et un second dispositif électroluminescent (702), dans lequel le premier dispositif électroluminescent émet de la lumière d'une longueur d'onde différente de celle de la lumière émise par le second dispositif électroluminescent (702).

2. Ensemble clavier selon la revendication 1, dans lequel la première couche de filtrage optique (100) est faite d'un luminophore.

3. Ensemble clavier selon la revendication 2, dans lequel le luminophore émet de la lumière rouge, verte, bleue et des combinaisons de celles-ci.

4. Ensemble clavier selon l'une quelconque des revendications 1 à 3, dans lequel le premier dispositif électroluminescent émet une lumière sensiblement de 400 nm et le second dispositif électroluminescent émet une lumière sensiblement de 470 nm.

5. Ensemble clavier selon la revendication 4, dans lequel la première couche de filtrage optique (100) réagit sur les touches et les éclaire avec diverses couleurs en émettant des lumières de diverses couleurs lorsque le premier dispositif électroluminescent émet une lumière de 400 nm ; et
dans lequel la première couche de filtrage optique ne réagit pas avec les touches et les éclaire avec une couleur unique en émettant des lumières de la couleur unique lorsque le second dispositif électroluminescent émet une lumière de 470 nm.

6. Ensemble clavier selon l'une quelconque des revendications 1 à 5, dans lequel des faces imprimées incluant chacune une face de nombre (31a) et une face de caractère (31b) sont imprimées sur les touches et la première couche de filtrage optique (100) est incluse de manière sélective sous la face de nombre ou la face de caractère.

7. Ensemble clavier selon la revendication 6, dans lequel la première couche de filtrage optique (100) est incluse sous la face de nombre des touches.

8. Ensemble clavier selon l'une quelconque des revendications 1 à 7, dans lequel les dispositifs électroluminescents sont inclus de manière adjacente aux commutateurs en forme de dôme de la plaque de commutation.

9. Ensemble clavier selon l'une quelconque des revendications 1 à 8, dans lequel la première couche de filtrage optique (100) est installée en dessous des touches en fonction du parcours de la lumière émise par les dispositifs électroluminescents.

10. Ensemble clavier selon l'une quelconque des revendications 1 à 9, comprenant en outre :
une pluralité de touches spéciales (32) fournissant des faces de caractères spéciaux (32b) ; et
des secondes couches de filtrage optique (200) positionnées en dessous des touches spéciales pour éclairer les faces de caractères spéciaux avec diverses couleurs par réaction avec les lumières générées par le premier dispositif électroluminescent et le second dispositif électroluminescent.

11. Ensemble clavier selon la revendication 1, dans lequel
au moins une première (300) et une seconde (400) couche de filtrage optique sont respectivement positionnées au-dessous d'une face de nombre (31a) et d'une face de caractère (31b) de chacune des touches (30), les première et seconde couches de filtrage optique changeant la couleur de la lumière générée en diverses couleurs par réaction ou absence de réaction avec les longueurs d'onde des lumières générées par les dispositifs électroluminescents.

12. Ensemble clavier selon la revendication 11, dans lequel la première couche de filtrage optique réagit avec la face de nombre de la touche et l'éclaire avec une première couleur et la seconde couche de filtrage optique ne réagit pas avec la face de caractère de la touche et l'éclaire avec une seconde couleur lorsque le premier dispositif électroluminescent émet une lumière violette de 400 nm ; et
dans lequel la première couche de filtrage optique et la seconde couche de filtrage optique ne réagissent pas avec la face de nombre et la face de caractère de la touche et l'éclaire avec une couleur bleue, lorsque le second dispositif électroluminescent émet une lumière bleue de 470 nm.
